# EUROPÄISCHE PATENTSCHRIFT

(11) **EP 2 778 027 B1**
(45) Veröffentlichungstag und Bekanntmachung des Hinweises auf die Patenterteilung: **02.08.2017**
(21) Anmeldenummer: 13159577.9
(22) Anmeldetag: 15.03.2013
(51) Int. Cl.: B62D 55/24

(54) **LAUFWERKSKETTE FÜR EINE PISTENRAUPE**
CRAWLER-TRACK FOR A SKI TRAIL GROOMING MACHINE
CHENILLE POUR DAMEUSE

(43) Veröffentlichungstag der Anmeldung: 17.09.2014
(73) Patentinhaber: Kässbohrer Geländefahrzeug AG, 88471 Laupheim (DE)
(72) Erfinder: Schocke, Bernd, 89192 Rammingen (DE)
(74) Vertreter: Patentanwälte Ruff, Wilhelm, Beier, Dauster & Partner mbB

(56) Entgegenhaltungen:
- WO-A1-2005/090894
- DE-A1- 3 731 618
- US-A- 4 218 101
- US-A- 5 354 124
- US-B1- 6 517 173

## Beschreibung

### Laufwerkskette für eine Pistenraupe

Die Erfindung betrifft eine Laufwerkskette für ein Kettenfahrzeug, insbesondere eine Pistenraupe, mit mehreren in Kettenlaufrichtung erstreckten flexiblen Kettenbändern, an denen eine Vielzahl von quer zur Kettenlaufrichtung ausgerichteten Kettensteganordnungen befestigt ist, wobei jedes Kettenband an seinen gegenüberliegenden Bandenden durch eine lösbare Kettenschlossanordnung zu einem endlos umlaufenden Ring verbunden ist.

Eine derartige Laufwerkskette (US6517173) ist für Pistenraupen zur Schneeoberflächenbearbeitung allgemein bekannt. Die Laufwerkskette weist mehrere parallel in Kettenlaufrichtung zueinander beabstandete Kettenbänder auf, die aus faserverstärkten Gummibändern bestehen. Jedes Kettenband wird an seinen gegenüberliegenden Bandenden mittels einer Kettenschlossanordnung zu einem umlaufenden Ring zusammengefügt. Die Kettenschlossanordnung weist zwei Klemmplatten auf, die über Schraubverbindungen miteinander verbunden werden. Die Bandenden jedes Kettenbands werden überlappend aufeinandergelegt und mit zueinander fluchtenden Bohrungen versehen, durch die die Schraubverbindungen der Kettenschlossanordnung hindurchdringen. Die Klemmplatten klemmen die überlappenden Bandenden ober- und unterseitig, wobei die Schraubverbindungen dazu dienen, die Klemmplatten unter Pressung der überlappenden Bandenden gegeneinanderzuziehen.

Aufgabe der Erfindung ist es, eine Laufwerkskette der eingangs genannten Art zu schaffen, die eine verbesserte Haltbarkeit und eine gleichmäßigere Kettenlauffunktion aufweist als beim Stand der Technik.

Diese Aufgabe wird dadurch gelöst, dass die Bandenden im Bereich der Kettenschlossanordnung in einer gemeinsamen Ebene miteinander fluchten und mit ihren Stirnrändern unmittelbar benachbart aneinandergrenzen. Dadurch, dass die Bandenden in einer gemeinsamen Ebene miteinander fluchten, entsteht kein Höhenversatz in der Laufwerkskette. Hierdurch wird eine verbesserte Kettenlauffunktion erzielt. Dadurch, dass die Bandenden mit ihren Stirnrändern unmittelbar benachbart aneinandergrenzen, ist es möglich, auch bezüglich der zu der Kettenschlossanordnung benachbarten Kettensteganordnungen die gleiche Teilung aufrechtzuerhalten wie zwischen den übrigen Kettensteganordnungen der Laufwerkskette. Hierdurch wird die Gleichmäßigkeit der Kettenlauffunktion weiter verbessert. Zudem sind die Bandenden im Bereich der Kettenschlossanordnung durch die erfindungsgemäße Lösung keinen erhöhten Belastungen oder keinem erhöhten Verschleiß ausgesetzt. Durch die erfindungsgemäße Lösung ist eine formschlüssige und verschleissfreie Verbindung zwischen den Bandenden erzielbar.

In Ausgestaltung der Erfindung weist die Kettenschlossanordnung zwei Kettenschlossteileinheiten auf, die jeweils einem der gegenüberliegenden Bandenden zugeordnet sind, und die in montiertem Zustand der Kettenschlossanordnung spielfrei miteinander verbunden sind. Durch die spielfreie Verbindung der Kettenschlossteileinheiten wird eine hohe Verschleißfestigkeit für die Laufwerkskette im Bereich der Kettenschlossanordnung jedes Kettenbands erzielt. In weiterer Ausgestaltung der Erfindung weist jede Kettenschlossteileinheit eine Vielzahl von über eine Breite jedes Bandendes verteilten Durchdringungsspitzen auf, die das Bandende orthogonal zu einer Banddeckfläche durchdringen und kopfseitig in einer auf der Banddeckfläche aufliegenden, formstabilen Trägeranordnung gehalten sind. Die Durchdringungsspitzen können form- oder stoffschlüssig in der Trägeranordnung gehalten sein. Es ist auch möglich, die Durchdringungsspitzen einstückig mit der Trägeranordnung auszubilden. Als Durchdringungsspitzen sind Stifte, Nägel, Schrauben oder auch U-förmig gekrümmte Doppelstifte nach Art von stabilen Heftzwecken vorgesehen. Alle Durchdringungsspitzen weisen als wesentliches Merkmal auf, dass sie so stabil, schlank und spitz zulaufend gestaltet sind, dass sie von der Banddeckfläche her durch die Dicke des Bandendes hindurchgetrieben oder hindurchgedreht werden können, ohne das Material des Bandendes nennenswert zu verletzen.

In weiterer Ausgestaltung der Erfindung weist jede Kettenschlossteileinheit auf einer gegenüberliegenden Banddeckfläche des Bandendes eine formstabile Aufnahmeanordnung auf, die die Durchdringungsspitzen spitzseitig kraft- oder formschlüssig aufnimmt. Unter der Spitzseite jeder Durchdringungsspitze ist das freie Stirnende der Durchdringungsspitze zu verstehen, die abliegend zu der in der Trägeranordnung gehaltenen Kopfseite vorgesehen ist. Dadurch wird eine sichere und dauerhafte Verankerung der Durchdringungsspitze in dem jeweiligen Bandende erzielt. Jedes Bandende wird ober- und unterseitig, d.h. kettenaußenseitig und ketteninnenseitig, durch die Trägeranordnung einerseits und die Aufnahmeanordnung andererseits flankiert, die sich vorzugsweise über die gesamte Breite des jeweiligen Bandendes erstrecken. Dadurch, dass die Durchdringungsspitzen einerseits dünn und schlank und andererseits so ausreichend stabil sind, dass sie beim Durchtreiben durch die Bandenden nicht brechen oder sich verbiegen, wird das Bandende geschont. Trotz der hindurchgedrungenen Durchdringungsspitzen behält das Bandende gegenüber den übrigen Bandabschnitten jedes Kettenbands seine Festigkeit und Stabilität nahezu unverändert bei, da die durch die Durchdringungsspitzen erzielten Löcher im jeweiligen Bandende keine nennenswerte Kerbwirkung erzielen.

In weiterer Ausgestaltung der Erfindung sind die Trägeranordnung als einteilige, über die Breite des Bandendes erstreckte Trägerleiste und/oder die Aufnahmeanordnung als einteilige, über die Breite des Bandendes erstreckte Aufnahmeleiste gestaltet. Die Trägerleiste und die Aufnahmeleiste sind vorzugsweise aus Metall, insbesondere aus Stahl, hergestellt. Bei einer alternativen Ausführungsform ist es vorgesehen, die Trägerleiste und/oder die Aufnahmeleiste mehrteilig zu gestalten.

In weiterer Ausgestaltung der Erfindung sind die Trägerleiste und/oder die Aufnahmeleiste mit einer auf die Anzahl und Position der Durchdringungsspitzen abgestimmten Anzahl und Ausrichtung von Durchtritten versehen. Die Durchtritte dienen zur form- oder stoffschlüssigen Aufnahme der Durchdringungsspitzen. Die Durchtritte können mit Innengewinden versehen sein.

In weiterer Ausgestaltung der Erfindung weist die Trägerleiste und/oder die Aufnahmeleiste wenigstens einen seitlichen Positioniersteg auf, der in montiertem Zustand an einem Seitenrand des Bandendes anliegt. Dadurch können die Trägerleiste und/oder die Aufnahmeleiste sich seitlich am Bandende abstützen, wodurch für die Montage jeder Kettenschlossteileinheit eine sichere Positionierung erzielt wird. Der wenigstens eine seitliche Positioniersteg verhindert bei einer Verbindung, insbesondere einem Vernageln der Trägerleiste mit der Aufnahmeleiste ein seitliches Auweichen, wodurch eine bessere Ausreissfestigkeit erzielbar ist.

In Ausgestaltung der Erfindung weist die Kettenschlossanordnung eine Verbindungsvorrichtung auf, die die Kettenschlossteileinheiten in montiertem Zustand spielfrei gegeneinander befestigt. Die spielfreie Verbindung der Kettenschlossteileinheiten miteinander durch die Verbindungsvorrichtung gewährleistet eine zumindest weitgehende Verschleißfreiheit für die Kettenschlossanordnung in montiertem Zustand der Laufwerkskette. Vorzugsweise verbindet die Verbindungsvorrichtung die Kettenschlossteileinheiten formschlüssig miteinander.

In Ausgestaltung der Erfindung weist die Verbindungsvorrichtung mehrere Befestigungselemente auf, die die Kettenschlossteileinheiten im Bereich beider gegenüberliegender Banddeckflächen verbinden und einstückig, formschlüssig oder kraftschlüssig mit jeweils einer Kettenschlossteileinheit verbunden sind. Als Befestigungselemente können Schraubelemente von Schraubverbindungen wie Kopfschrauben und Gewindemuttern vorgesehen sein, wobei entsprechende Gewindemuttern vorzugsweise mit einem entsprechenden Teil der zugeordneten Kettenschlossteileinheit verschweißt sein können. Es ist auch möglich, als Befestigungsmittel ein mit wenigstens einer Gewindebohrung versehenes Befestigungsprofil vorzusehen.

In weiterer Ausgestaltung der Erfindung weisen die Befestigungselemente im Bereich einer innenseitigen Banddeckfläche Gewindebohrungen zur Aufnahme von Schrauben auf, und die Befestigungselemente umfassen komplementäre Schrauben, deren Werkzeugangriffsflächen im Bereich der außenseitigen Banddeckfläche vorgesehen sind. Dadurch wird eine Montage und Demontage der Laufwerkskette vereinfacht, da die Werkzeugangriffsflächen der Schrauben bandaußenseitig vorgesehen sind. Unter der außenseitigen Banddeckfläche wird die Bandseite verstanden, die in montiertem Zustand der Laufwerkskette am Kettenfahrzeug die Außenseite der umlaufenden Kette bildet, wohingegen die innenseitige Banddeckfläche die Innenseite des umlaufenden Rings jedes Kettenbands bildet. Dabei wird unter der Außen- und Innenseite die entsprechende Ausrichtung in Kettenhochrichtung verstanden, so dass die Außenseite im Bereich des oberen Bandtrums jedes Kettenbands die Oberseite und die Innenseite im Bereich dieses oberen Bandtrums die Unterseite definiert.

In weiterer Ausgestaltung der Erfindung weist die Verbindungsvorrichtung Sicherungsprofile auf, die die Trägerleisten und Aufnahmeleisten der Kettenschlossteileinheiten in montiertem Zustand formschlüssig übergreifen und parallel zur Breitenerstreckung der Bandenden auf entsprechende Profilabschnitte der Träger- und Aufnahmeleisten aufgeschoben sind. Die Sicherungsprofile sind quer zur Kettenlängsrichtung aufgeschoben und übergreifen die Profilabschnitte der Träger- und Aufnahmeleisten in Bandlängsrichtung spielfrei und formschlüssig.

In weiterer Ausgestaltung der Erfindung umfasst die Verbindungsvorrichtung zueinander komplementäre Keilprofilierungen, die den benachbarten Kettenschlossteileinheiten zugeordnet sind und in montiertem Zustand formschlüssig und verkeilt ineinandergreifen. Die Keilprofilierungen können auch im Bereich der Sicherungsprofile sowie der Profilabschnitte der Träger- und Aufnahmeleisten vorgesehen sein, wobei die Sicherungsprofile von der Seite her aufgeschoben werden und beim seitlichen Aufschieben zwangsläufig aufgrund der Keilprofilierungen ein Zusammenschieben der Kettenschlossteileinheiten in Bandlängsrichtung bewirken.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Frontansicht eine Pistenraupe mit einer Ausführungsform einer erfindungsgemäßen Laufwerkskette,
- Fig. 2: in vergrößerter Darstellung in einer Draufsicht die Laufwerkskette für die Pistenraupe nach Fig. 1,
- Fig. 3: in weiter vergrößerter, isometrischer Darstellung einen Ausschnitt der Laufwerkskette im Bereich einer Kettenschlossanordnung,
- Fig. 4: die Darstellung nach Fig. 3 in unmontiertem Zustand der Kettenschlossanordnung,
- Fig. 5: den Ausschnitt der Laufwerkskette im Bereich der Kettenschlossanordnung gemäß den Fig. 3 und 4, jedoch in einer Explosionsdarstellung,
- Fig. 6: in einer weiteren isometrischen Explosionsdarstellung einen Ausschnitt einer weiteren Ausführungsform einer erfindungsgemäßen Laufwerkskette ähnlich den Fig. 1 bis 5,
- Fig. 7: die Kettenschlossanordnung gemäß Fig. 6, jedoch in montiertem Zustand und
- Fig. 8: die Kettenschlossanordnung nach den Fig. 6 und 7 in teilweise montiertem Zustand.

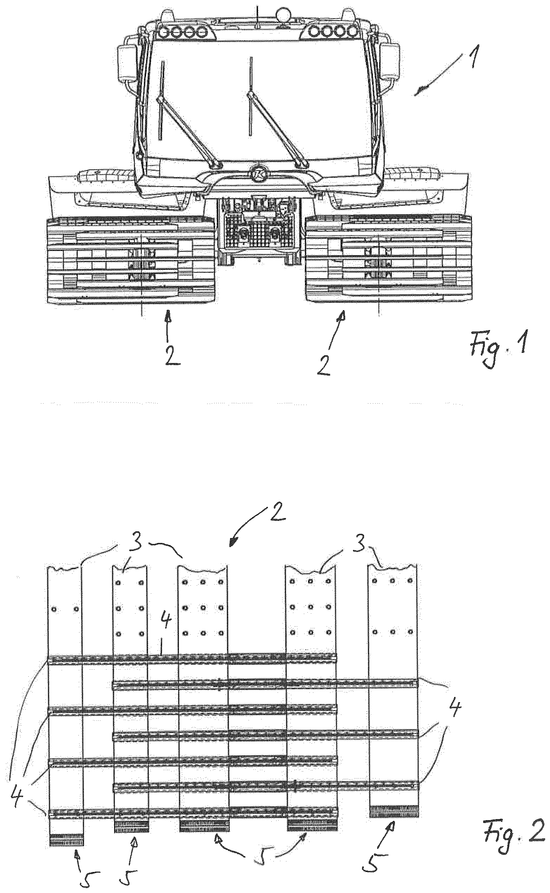

Eine Pistenraupe 1 nach Fig. 1 weist ein Kettenlaufwerk auf, das zwei Laufwerksketten 2 umfasst. Jede Laufwerkskette 2 ist auf einer Fahrwerkseite des Fahrwerkrahmens angeordnet und läuft im Betrieb der Pistenraupe 1 über ein Turasrad und mehrere Laufräder um. Jede Laufwerkskette 2 umfasst mehrere Kettenbänder 3, die aus faserverstärkten Gummibändern bestehen, wobei die Faserverstärkung durch Gewebeeinlagen in den Gummibändern 3 gebildet ist. Die Gummibänder 3 verlaufen parallel zueinander beabstandet in Kettenlängsrichtung und damit in Fahrzeuglängsrichtung. Auf den Kettenbändern 3 ist außenseitig eine Vielzahl von Kettenstegen 4 befestigt, die vorzugsweise aus einer Aluminiumlegierung bestehen. Die Kettenstege 4 erstrecken sich quer zur Laufrichtung der Laufwerkskette 2 über wenigstens vier Kettenbänder 3, wobei die jeweils benachbarten Kettenstege 4 quer zur Kettenlaufrichtung zueinander versetzt angeordnet sind, wie anhand der Fig. 2 erkennbar ist.

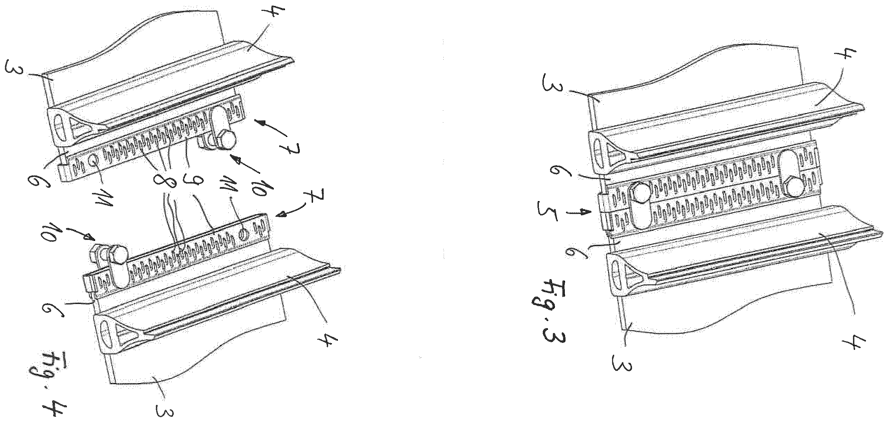

Jedes Kettenband 3 bildet dadurch einen umlaufenden Kettenbandring, dass gegenüberliegende Bandenden 6 (Fig. 3 und 4) jedes Kettenbands 3 mittels jeweils einer Kettenschlossanordnung 5 zu dem ringförmig umlaufenden Kettenband miteinander verbunden werden.

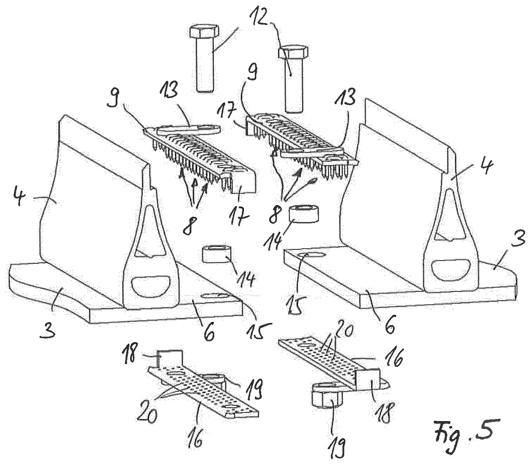

Anhand der Fig. 3 bis 5 ist eine Kettenschlossanordnung 5 für eines der Kettenbänder 3 detailliert dargestellt. Die Kettenschlossanordnung 5 weist zwei Kettenschlossteileinheiten 7 auf, die jeweils einem Bandende 6 des Kettenbands 3 zugeordnet sind. Jede Kettenschlossteileinheit 7 ist in nachfolgend beschriebener Weise formschlüssig fest mit dem jeweiligen Bandende 6 verbunden. Hierzu ist im Bereich jeder Kettenschlossteileinheit 7 im Bereich einer außenseitigen Banddeckfläche des Kettenbands 3 eine sich über die gesamte Breite des Kettenbands 3 und des Bandendes 6 erstreckende Trägerleiste 9 vorgesehen, in der über die Breite der Trägerleiste 9 verteilt eine Vielzahl von Durchdringungsspitzen 8 aufgenommen sind. Die Durchdringungsspitzen 8 sind als Doppelstifte ausgeführt, deren spitzseitige Enden angespitzt sind. Kopfseitig sind entsprechende Stiftspitzen der Doppelstifte über jeweils einen Quersteg miteinander verbunden, die jeweils formschlüssig in entsprechenden Durchtritten in der Trägerleiste 9 gehalten sind. Im Bereich der innenseitigen Banddeckfläche jedes Bandendes 6 ist jeweils eine Aufnahmeleiste 16 vorgesehen, die mit einer Vielzahl von Aufnahmedurchtritten 20 versehen ist, um die Spitzenden der Durchdringungsspitzen 8 form- oder kraftschlüssig aufzunehmen. Die durch die Aufnahmedurchtritte 20 gebildete Lochung weist ein Lochbild auf, das der Anzahl und der Positionierung der Durchdringungsspitzen 8 in der Trägerleiste 9 entspricht. Sowohl jede Trägerleiste 9 als auch jede Aufnahmeleiste 16 ist seitlich mit einem rechtwinklig abragenden Positioniersteg 17, 18 versehen, der bei einer Montage der Trägerleiste 9 und der Aufnahmeleiste 16 an einen Seitenrand des Bandendes 6 angelegt wird, um eine exakte Positionierung der Trägerleiste 9 und der Aufnahmeleiste 16 am jeweiligen Bandende 6 zu ermöglichen. Außerdem verhindert der Positioniersteg 17, 18 bei einem Vernageln der Trägerleiste 9 mit der Aufnahmeleiste 16 ein seitliches Ausweichen, wodurch sich eine verbesserte Ausreissfestigkeit ergibt.

In jedem Bandende 6 ist zudem versetzt zu einer Bandmitte jeweils ein zylindrischer Durchbruch 15 vorgesehen, in dem eine Durchtrittsbuchse 16 aufgenommen ist. Die Durchtrittsbuchse 14 ist in den jeweiligen Durchbruch 15 eingesteckt und kraftschlüssig in dem Durchbruch 15 gehalten. Für eine Montage jeder Kettenschlossteileinheit 7 an dem jeweiligen Bandende 6 werden die Durchdringungsspitzen 8 von der außen liegenden Banddeckfläche her durch das Bandende 6 hindurchgetrieben. Die Durchdringungsspitzen 8 sind vorzugsweise nach Art von Kammleisten fest in der Trägerleiste 9 verankert, so dass ein Hindurchtreiben der Durchdringungsspitzen 8 durch das gewebeverstärkte Gummimaterial des jeweiligen Bandendes 6 durch einfaches Aufpressen der Trägerleiste 9 und gleichzeitiges Gegenhalten mittels der im Bereich der innenseitigen Banddeckfläche anliegenden Aufnahmeleiste 16 erfolgt. Die Durchdringungsspitzen 8 können kraftschlüssig in die Aufnahmedurchtritte 20 der inneren Aufnahmeleiste 16 eingepresst werden. Falls die Aufnahmedurchtritte 20 die Spitzenden der Durchdringungsspitzen 8 mit Spiel aufnehmen, ist es möglich, die Spitzenden der Durchdringungsspitzen 8 unterhalb der Aufnahmeleiste umzubiegen und hierdurch eine formschlüssige Sicherung zu bieten. Alternativ ist auch ein Formschluss nach Art einer Vernietung im Bereich der Unterseite der jeweiligen Aufnahmeleiste 16 möglich.

Die Kettenschlossanordnung 5 weist zudem eine Verbindungsvorrichtung 10, 11 auf, die die beiden Kettenschlossteileinheiten spielfrei miteinander verbindet. Die Verbindungsvorrichtung weist zum einen zwei Kopfschrauben auf, die kopfseitig mit Werkzeugangriffsflächen, vorliegend in Form jeweils eines Sechskants, versehen sind. Den Kopfschrauben 12 ist zudem jeweils eine Schraubmutter 19 mit jeweils einem Innengewinde zugeordnet, das auf das Außengewinde der jeweiligen Schraube 12 abgestimmt ist. Jede der beiden Gewindemuttern 19 ist an jeweils einem Stegfortsatz der jeweiligen innenseitigen Aufnahmeleiste 16 befestigt. Die beiden Stegfortsätze mit den vorzugsweise durch Verschweißen daran befestigten Schraubmuttern 19 ragen von der jeweiligen Aufnahmeleiste 16 zum jeweils gegenüberliegenden Bandende 6 in Bandlängsrichtung ab, wobei die Schraubmuttern 19 mit ihren Befestigungsstegen entgegengesetzt versetzt zueinander an den gegenüberliegenden Aufnahmeleisten 16 befestigt sind. Die Stegfortsätze sind an der jeweiligen Aufnahmeleiste 16 angeschweißt.

Zur Aufnahme und Führung der Befestigungsschrauben 12 ist auch im Bereich jeder Trägerleiste 9 jeweils ein Stegfortsatz 13 vorgesehen, der auf die jeweilige Trägerleiste 9 aufgeschweißt ist und in Hochrichtung fluchtend zum Stegfortsatz der jeweiligen innenseitigen Schraubmutter 19 ausgerichtet ist. Die Stegfortsätze 13 der Trägerleiste 9 sind mit Durchtrittsbohrungen versehen, in die die Schrauben 12 eintauchen. Die Durchtrittsbohrungen fluchten in zusammengefügtem Montagezustand der Kettenschlossteileinheiten 7 mit den Durchtritten 11 der jeweils benachbarten Kettenschlossteileinheit 7, so dass jede Schraube 12 sowohl durch die Durchtrittsbohrung des zugeordneten Stegfortsatzes 13 als auch durch die jeweilige Kettenbandbuchse 15 hindurchtreten kann, um in die in der Darstellung nach den Fig. 3 bis 5 unten liegende, jeweilige Schraubmutter 19 eingeschraubt werden zu können. In montiertem Zustand der Kettenschlossteileinheiten 7 miteinander sind die jeweils vorderen Stirnränder der Bandenden 6 unmittelbar benachbart zueinander positioniert. Die Stirnränder der Bandenden 6 liegen in diesem montierten Zustand entweder auf Stoß aneinander an oder sie sind lediglich über einen sehr geringen Spalt zueinander beabstandet. Durch die Verschraubung der Kopfschrauben 12 mit den Schraubmuttern 19 werden die Kettenschlossteileinheiten 7 spielfrei miteinander verbunden, wobei nicht nur die Bandenden 6 unmittelbar aneinandergrenzen, sondern auch die Trägerleisten 9 und 16 der benachbarten Kettenschlossteileinheiten 7. Die Bandenden 6 sind in montiertem Zustand der Kettenschlossanordnung 5 in einer gemeinsamen Bandebene fluchtend zueinander ausgerichtet.

In montiertem Zustand der Kettenschlossanordnung 5 weisen die zur Kettenschlossanordnung 5 benachbarten Kettenstege 4 einen Teilungsabstand voneinander auf, der zumindest weitgehend den Teilungsabständen der übrigen benachbarten Kettenstege 4 der Laufwerkskette 2 entspricht.

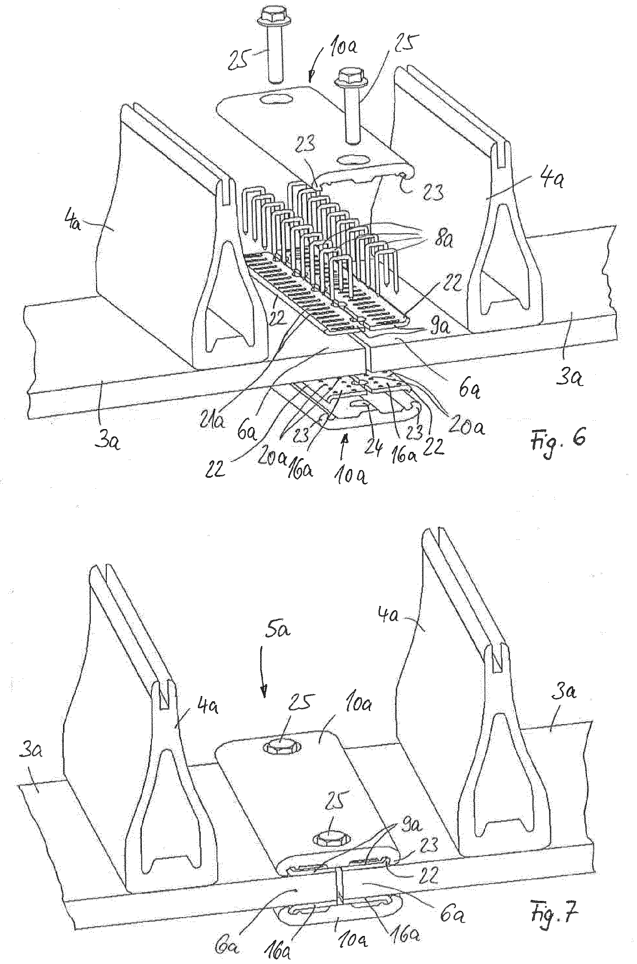

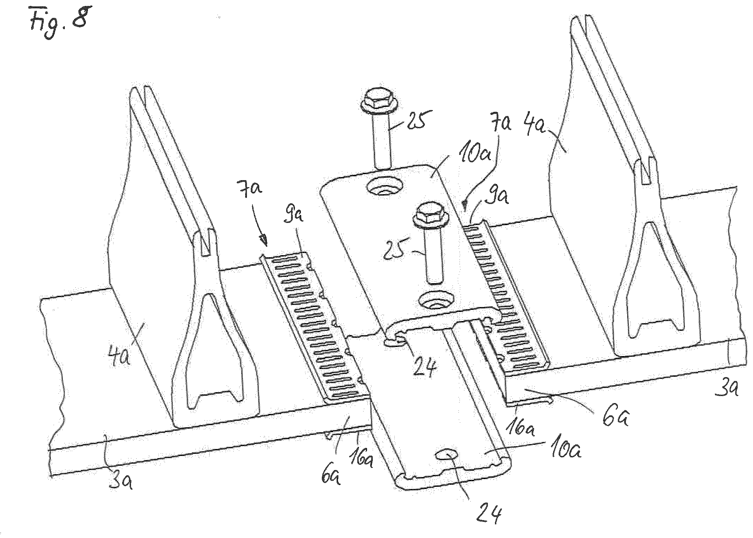

Die anhand der Fig. 6 bis 8 dargestellte Ausführungsform stellt eine weitere Kettenschlossanordnung 5a für ein Kettenband 3a auf, das in gleicher Weise in eine Laufwerkskette einer Pistenraupe integriert ist, wie dies anhand der Fig. 1 und 2 bereits beschrieben wurde. Zur Vermeidung von Wiederholungen wird daher insoweit auf die Beschreibung zu der Ausführungsform nach den Fig. 1 bis 5 verwiesen. Gleiche Teile und Abschnitte werden mit gleichen Bezugszeichen, aber unter Hinzufügung des Buchstabens a versehen.

Die Kettenschlossanordnung 5a weist zwei Kettenschlossteileinheiten 7a auf, die in identischer Weise mit dem jeweiligen Bandende 6 des Kettenbands 3a verbunden sind, wie dies anhand der Ausführungsform gemäß den Fig. 1 bis 5 der Fall ist. Jede Kettenschlossteileinheit 7a weist eine außenseitige Trägerleiste 9a auf, die sich über eine gesamte Breite des jeweiligen Bandendes 6a erstreckt. Zudem weist jede Kettenschlossteileinheit 7a innenseitig jeweils eine Aufnahmeleiste 16a auf, die sich ebenfalls über die gesamte Breite des Bandendes 6a erstreckt und die im Bereich einer innenseitigen Banddeckfläche an dem Bandende 6a anliegt. Die Trägerleiste 9a weist eine Vielzahl von über die Breite der Trägerleiste 9a verteilt angeordneten und parallel in gleichmäßigen Abständen in Bandlängsrichtung ausgerichteten Aufnahmeschlitzen 21a auf, die zur formschlüssigen Aufnahme und Verankerung einer entsprechenden Anzahl von Durchdringungsspitzen 8a in der Trägerleiste 9a dienen. Die Durchdringungsspitzen 8a sind - wie bei der Ausführungsform nach den Fig. 3 bis 5 - als U-förmige Doppelstege ausgeführt, wie anhand der Fig. 6 erkennbar ist. Die innenseitigen Aufnahmeleisten 16a sind mit korrespondierenden Durchtritten 20a versehen, die als auf die Spitzenden der Durchdringungsspitzen 8a abgestimmte Löcher gestaltet sind. Die Spitzenden der Durchdringungsspitzen 8a tauchen in die Löcher der innenseitigen Aufnahmeleiste 16 ein. Die Spitzenden können in die Löcher 20a kraftschlüssig eintauchen oder - bei ausreichender Länge - durch Umbiegen im Bereich der Aufnahmeleiste 16a formschlüssig aufgenommen sein. Die Durchdringungsspitzen 8a werden für eine Montage im Bereich der Bandenden 6a in gleicher Weise von außen her quer durch das Material des jeweiligen Bandendes 6a hindurchgetrieben, wie dies bei der Ausführungsform gemäß den Fig. 3 bis 5 der Fall war.

Um die beiden Kettenschlossteileinheiten 7a miteinander zu verbinden, ist eine Verbindungsvorrichtung 10a, 24, 25 vorgesehen, die die Aufnahmeleisten 16a und Trägerleisten 19a in Bandlängsrichtung formschlüssig übergreift. Hierzu sind die dem jeweiligen Stirnrand des Bandendes 6a abgewandten Längsränder der Trägerleisten 9a und Aufnahmeleisten 16a von der Banddeckfläche weg aufgebogen und bilden Profilabschnitte in Form von Stegprofilierungen 22, die sich über die gesamte Länge der jeweiligen Trägerleiste 9a und Aufnahmeleiste 16a erstrecken.

Die Verbindungsvorrichtung weist zudem bandaußenseitig und bandinnenseitig jeweils ein Sicherungsprofil 10a auf, das formstabil gestaltet ist und einen C-artigen Querschnitt besitzt, dessen gegenüberliegende Seitenschenkel durch jeweils eine Profilierung in Form einer Sicherungsnut 23 gebildet ist. Die Sicherungsnuten 23 sind auf die Stegprofilierungen 22 derart abgestimmt, dass die Sicherungsprofile 10a in zusammengefügtem Montagezustand der beiden Bandenden 6a von der Seite her über die benachbarten Trägerleisten 9a und Aufnahmeleisten 16a geschoben werden können und hierdurch die Kettenschlossteileinheiten 7a in Bandlängsrichtung formschlüssig gegeneinander sichern. Um die beiden außen- und innenliegenden Sicherungsprofile 10a in Bandhochrichtung gegeneinander zu fixieren und gleichzeitig eine Klemmwirkung auf die Kettenschlossteileinheiten 7a zu schaffen, ist das untere Sicherungsprofil 10a mit Gewindebohrungen 24 versehen, denen Kopfschrauben 25 zugeordnet sind, die von außen her durch das äußere Sicherungsprofil 10a hindurch in die Gewindebohrungen 24 eingeschraubt werden können. Die Köpfe der Kopfschrauben 25 stützen sich auf dem außenliegenden Sicherungsprofil 10a ab, wie anhand der Fig. 7 erkennbar ist. Die Bandenden wie auch die Aufnahmeleisten 9a und Trägerleisten 16a sind im Bereich ihrer aneinandergrenzenden Stoßstellen oder Stirnränder mit komplementären Aussparungen versehen, um das Hindurchtauchen der Kopfschrauben 25 von außen her bis zu den Gewindebohrungen 24 des innenliegenden Sicherungsprofils 10a nicht zu behindern.

Alternativ zu der zuvor beschriebenen Befestigungsweise ist es auch möglich, vor einer Montage der Sicherungsprofile 10a zunächst die Bandenden 6a so gegeneinander zu führen, dass die Bandenden 6a aneinander stoßen. Dadurch können die Sicherungsprofile 10a von oben und von unten auf die Aufnahmeleisten 9a und die Trägerleisten 16a mit Spiel aufgesetzt werden. Anschließend werden die Kopfschrauben 25 zwischen den gegenüberliegenden Bandenden 6a hindurchgetrieben, wodurch zwangsläufig die Bandenden 6a um einen gewissen Betrag auseinandergetrieben werden. Hierdurch ergibt sich zwangsläufig, dass auch die Aufnahmeleisten 9a und die Trägerleisten 16a mit zurückbewegt werden, wodurch diese an den beschriebenen Sicherungsnuten 23 formschlüssig zur Anlage kommen. Damit ist zwangsläufig die formschlüssig gesicherte Endlage der Bandenden 6a einschließlich ihrer Aufnahmeleisten 9a und Trägerleisten 16a erzielt.

Sowohl bei der Ausführungsform nach den Fig. 3 bis 5 als auch bei der Ausführungsform nach den Fig. 6 bis 8 sind die Werkzeugangriffsflächen der Kopfschrauben 12, 25 außenseitig im Bereich der Kettenbänder 3 und damit der jeweiligen Kettenschlossanordnung 5, 5a angeordnet, so dass eine einfache Montage und Demontage vorgenommen werden kann.

## Patentansprüche

1. Laufwerkskette für ein Kettenfahrzeug, insbesondere eine Pistenraupe, mit mehreren in Kettenlaufrichtung erstreckten flexiblen Kettenbändern, an denen eine Vielzahl von quer zur Kettenlaufrichtung ausgerichteten Kettensteganordnungen befestigt ist, wobei jedes Kettenband an seinen gegenüberliegenden Bandenden durch eine lösbare Kettenschlossanordnung zu einem endlos umlaufenden Ring verbunden ist, und wobei die Bandenden (6, 6a) im Bereich der Kettenschlossanordnung (5, 5a) in einer gemeinsamen Ebene miteinander fluchten, wobei die Bandenden (6, 6a) mit ihren Stirnrändern unmittelbar benachbart aneinandergrenzen, **dadurch gekennzeichnet, dass** die Kettenschlossanordnung (5, 5a) zwei Kettenschlossteileinheiten (7, 7a) aufweist, die jeweils einem der gegenüberliegenden Bandenden (6, 6a) zugeordnet sind, und die in montiertem Zustand der Kettenschlossanordnung (5, 5a) spielfrei miteinander verbunden sind, dass die Kettenschlossanordnung (5, 5a) eine Verbindungsvorrichtung (10, 11; 10a) aufweist, die die Kettenschlossteileinheiten (7, 7a) in montiertem Zustand spielfrei gegeneinander befestigt, und dass die Verbindungsvorrichtung mehrere Befestigungselemente (12, 19; 10a, 24, 25) aufweist, die die Kettenschlossteileinheiten (7, 7a) im Bereich beider gegenüberliegender Banddeckflächen miteinander verbinden und einstückig, formschlüssig oder kraftschlüssig mit jeweils einer Kettenschlossteileinheit (7, 7a) verbunden sind.

2. Laufwerkskette nach Anspruch 1, **dadurch gekennzeichnet, dass** jede Kettenschlossteileinheit (7, 7a) eine Vielzahl von über eine Breite jedes Bandendes (6, 6a) verteilten Durchdringungsspitzen (8, 8a) aufweist, die das Bandende (6, 6a) orthogonal zu einer Banddeckfläche durchdringen und kopfseitig in einer auf der Banddeckfläche aufliegenden, formstabilen Trägeranordnung (9, 9a) gehalten sind.

3. Laufwerkskette nach Anspruch 2, **dadurch gekennzeichnet, dass** jede Kettenschlossteileinheit (7, 7a) auf einer gegenüberliegenden Banddeckfläche des Bandendes (6, 6a) eine formstabile Aufnahmeanordnung (16, 16a) aufweist, die die Durchdringungsspitze (8, 8a) spitzseitig kraft- oder formschlüssig aufnimmt.

4. Laufwerkskette nach Anspruch 2 oder 3, **dadurch gekennzeichnet, dass** die Trägeranordnung als einteilige, über die Breite des Bandendes (6, 6a) erstreckte Trägerleiste (9, 9a) und/oder die Aufnahmeanordnung als einteilige, über die Breite des Bandendes (6, 6a) erstreckte Aufnahmeleiste (16, 16a) gestaltet sind.

5. Laufwerkskette nach Anspruch 4, **dadurch gekennzeichnet, dass** die Trägerleiste (9, 9a) und/oder die Aufnahmeleiste (16, 16a) mit einer auf die Anzahl und Position der Durchdringungsspitzen (8) abgestimmten Anzahl und Ausrichtung von Durchtritten (20, 20a; 21 a) versehen sind.

6. Laufwerkskette nach Anspruch 4 oder 5, **dadurch gekennzeichnet, dass** die Trägerleiste (9) und/oder die Aufnahmeleiste (16) wenigstens einen seitlichen Positioniersteg (17, 18) aufweisen, der in montiertem Zustand an einem Seitenrand des Bandendes (6) anliegt.

7. Laufwerkskette nach Anspruch 1, **dadurch gekennzeichnet, dass** die Befestigungselemente im Bereich einer innenseitigen Banddeckfläche Gewindebohrungen (19, 24) zur Aufnahme von Schrauben (12, 25) aufweisen, und dass die Befestigungselemente komplementäre Schrauben (12, 25) umfassen, deren Werkzeugangriffsflächen im Bereich der außenseitigen Banddeckfläche vorgesehen sind.

8. Laufwerkskette nach Anspruch 1, **dadurch gekennzeichnet, dass** die Verbindungsvorrichtung Sicherungsprofile (10a) aufweist, die die Trägerleisten (9a) und Aufnahmeleisten (16a) der Kettenschlossteileinheiten (7a) in montiertem Zustand formschlüssig übergreifen und parallel zur Breitenerstreckung der Bandenden (6a) auf entsprechende Profilabschnitte (22) der Trägerleisten (9a) und Aufnahmeleisten (16a) aufgeschoben sind.

9. Laufwerkskette nach einem der Ansprüche 7 oder 8, **dadurch gekennzeichnet, dass** die Verbindungsvorrichtung zueinander komplementäre Keilprofilierungen umfasst, die den benachbarten Kettenschlossteileinheiten zugeordnet sind und in montiertem Zustand verkeilt ineinandergreifen.

## Claims

1. Crawler chain for a tracked vehicle, in particular a tracked piste grooming vehicle, having a plurality of flexible chain belts extending in the chain running direction, to which chain belts a multitude of chain grouser arrangements oriented transversely to the chain running direction are fixed, wherein each chain belt is connected on its opposite belt ends by a releasable chain lock arrangement to form an endless revolving ring, and wherein the belt ends (6, 6a) are aligned with each other in a common plane in the region of the chain lock arrangement (5, 5a), wherein the face edges of the belt ends (6, 6a) adjoin each other directly adjacently, **characterized in that** the chain lock arrangement (5, 5a) includes two chain lock partial units (7, 7a), each thereof associated with a respective one of the opposite belt ends (6, 6a), and which are interconnected without clearance in the assembled state of the chain lock arrangement (5, 5a), **in that** the chain lock arrangement (5, 5a) includes a connecting device (10, 11; 10a) to fix the chain lock partial units (7, 7a) in relation to each other without clearance in the assembled state, and **in that** the connecting device includes a plurality of fixing elements (12, 19; 10a, 24, 25) to interconnect the chain lock partial units (7, 7a) in the region of the two opposite belt cover surfaces, and which fixing elements are connected to a respective chain lock partial unit (7, 7a) in an integral, form-fitting or force-fitting manner.

2. Crawler chain according to claim 1, **characterized in that** each chain lock partial unit (7, 7a) includes a multitude of penetrating tips (8, 8a) distributed over a width of each of the belt ends (6, 6a), which tips penetrate the belt end (6, 6a) orthogonal to a belt cover surface and are held on the head side in a dimensionally stable supporting arrangement (9, 9a) resting on the belt cover surface.

3. Crawler chain according to claim 2, **characterized in that** each chain lock partial unit (7, 7a) includes a dimensionally stable accommodating arrangement (16, 16a) on an opposite belt cover surface of the belt end (6, 6a) to receive the penetrating tip (8, 8a) on the tip side in a force-fitting or form-fitting manner.

4. Crawler chain according to claim 2 or 3, **characterized in that** the supporting arrangement is designed as a one-piece supporting strip (9, 9a) extending over the width of the belt end (6, 6a) and/or the accommodating arrangement is designed as a one-piece accommodating strip (16, 16a) extending over the width of the belt end (6, 6a).

5. Crawler chain according to claim 4, **characterized in that** the supporting strip (9, 9a) and/or the accommodating strip (16, 16a) are/is provided with a number and orientation of through holes (20, 20a; 21 a) matched to the number and position of the penetrating tips (8).

6. Crawler chain according to claim 4 or 5, **characterized in that** the supporting strip (9) and/or the accommodating strip (16) include at least one lateral positioning web (17, 18), abutting on a lateral edge of the belt end (6) in the assembled state.

7. Crawler chain according to claim 1, **characterized in that** the fixing elements include threaded holes (19, 24) for the accommodation of screws (12, 25) in the region of an internal belt cover surface, and **in that** the fixing elements comprise complementary screws (12, 25), with the tool engagement surfaces thereof being provided in the region of the external belt cover surface.

8. Crawler chain according to claim 1, **characterized in that** the connecting device includes securing profiles (10a) which engage across the supporting strips (9a) and the accommodating strips (16a) of the chain lock partial units (7a) in a form-fitting manner in the assembled state, and which are pushed onto corresponding profile sections (22) of the supporting strips (9a) and accommodating strips (16a) in parallel to the width extension of the belt ends (6a).

9. Crawler chain according to any of claims 7 or 8, **characterized in that** the connecting device comprises mutually complementary wedge-type profilings which are associated with the adjacent chain lock partial units and mesh in a wedged manner in the assembled state.

## Revendications

1. Chenille de train de roulement pour un véhicule chenillé, en particulier une dameuse, avec plusieurs bandes de chenille flexibles s'étendant dans le sens de marche de la chenille, sur lesquelles une multitude d'arrangements de crampons de chenille orientés transversalement par rapport au sens de marche de la chenille sont attachés, chaque bande de chenille étant connectée sur ses extrémités de bande opposées par un dispositif de verrouillage de chenille détachable pour former un anneau circulant sans fin, et les extrémités de bande (6, 6a) dans la zone du dispositif de verrouillage de chenille (5, 5a) étant alignées l'une sur l'autre dans un plan commun, les bords frontales des extrémités de bande (6, 6a) étant directement adjacentes et juxtaposant, **caractérisée en ce que** le dispositif de verrouillage de chenille (5, 5a) présente deux unités partielles de verrouillage de chenille (7, 7a), chacune associée à une respective des extrémités de bande (6, 6a) opposées, et qui sont interconnectées sans jeu dans l'état assemblé du dispositif de verrouillage de chenille (5, 5a), **en ce que** le dispositif de verrouillage de chenille (5, 5a) présente un dispositif de connexion (10, 11 ; 10a) pour fixer les unités partielles de verrouillage de chenille (7, 7a) l'une par rapport à l'autre dans l'état assemblé, et **en ce que** le dispositif de connexion présente plusieurs éléments de fixation (12, 19 ; 10a, 24, 25) pour interconnecter les unités partielles de verrouillage de chenille (7, 7a) l'une à l'autre dans la zone des deux surfaces de couverture de bande opposées et lesdits éléments de fixation sont connectés à une unité partielle de verrouillage de chenille (7, 7a) respective de manière intégralement, en liaison par complémentarité de formes ou de forces.

2. Chenille de train de roulement selon la revendication 1, **caractérisée en ce que** chaque unité partielle de verrouillage de chenille (7, 7a) présente une multitude de pointes de pénétration (8, 8a) distribuées sur une largeur de chaque extrémité de bande (6, 6a), lesdites pointes pénétrant l'extrémité de bande (6, 6a) orthogonalement par rapport à une surface de couverture de bande et étant retenues du côté de la tête dans un dispositif de support (9, 9a) de stabilité dimensionnelle faisant appui sur la surface de couverture de bande.

3. Chenille de train de roulement selon la revendication 2, **caractérisée en ce que** chaque unité partielle de verrouillage de chenille (7, 7a) présente un agencement de logement (16, 16a) de stabilité dimensionnelle sur une surface de couverture de bande opposée de l'extrémité de bande (6, 6a), ledit agencement de logement recevant la pointe de pénétration (8, 8a) du côté de la pointe par complémentarité de forces ou de formes.

4. Chenille de train de roulement selon la revendication 2 ou 3, **caractérisée en ce que** le dispositif de support est conçu sous forme de lame de support (9, 9a) monobloc s'étendant sur la largeur de l'extrémité de bande (6, 6a) et/ou l'agencement de logement est conçu sous forme de lame de logement (16, 16a) monobloc s'étendant sur la largeur de l'extrémité de bande (6, 6a).

5. Chenille de train de roulement selon la revendication 4, **caractérisée en ce que** la lame de support (9, 9a) et/ou la lame de logement (16, 16a) sont/est prévue(s) d'un nombre et d'une orientation de trous traversants (20, 20a ; 21 a) adaptés au nombre et à la position des pointes de pénétration (8).

6. Chenille de train de roulement selon la revendication 4 ou 5, **caractérisée en ce que** la lame de support (9) et/ou la lame de logement (16) présente(nt) au moins une arête de positionnement (17, 18) latérale reposant sur un bord latéral de l'extrémité de bande (6) dans l'état assemblé.

7. Chenille de train de roulement selon la revendication 1, **caractérisée en ce que** les éléments de fixation présentent des trous filetés (19, 24) pour recevoir des vis (12, 25) dans la zone d'une surface de couverture de bande du côté intérieur, et **en ce que** les éléments de fixation comportent des vis complémentaires (12, 25), les surfaces pour l'engagement d'un outil desdites vis étant prévues dans la zone de la surface de couverture de bande du côté extérieur.

8. Chenille de train de roulement selon la revendication 1, **caractérisée en ce que** le dispositif de connexion présente des profilés d'attache (10a) engageant à travers et par complémentarité de formes les lames de support (9a) et les lames de logement (16a) des unités partielles de verrouillage de chenille (7a) dans l'état assemblé et lesquels sont poussés sur des sections de profilé (22) correspondants des lames de support (9a) et des lames de logement (16a) parallèlement à l'extension de largeur des extrémités de bande (6a).

9. Chenille de train de roulement selon l'une des revendications 7 ou 8, **caractérisée en ce que** le dispositif de connexion comprend des profilés cunéiformes complémentaires l'un à l'autre, associés aux unités partielles de verrouillage de chenille adjacentes et s'engrenant de manière coincé dans l'état assemblé.
